# EUROPEAN PATENT APPLICATION

(11) **EP 4 274 024 A1**
(43) Date of publication of application: **08.11.2023**
(21) Application number: 23709584.9
(22) Date of filing: 22.02.2023
(51) Int. Cl.: H01Q 1/24, H01Q 1/22, H04M 1/02

(54) **ANTENNA STRUCTURE AND ELECTRONIC DEVICE INCLUDING SAME**

(30) Priority: 22.03.2022 KR 20220035575; 02.08.2022 KR 20220096323
(71) Applicant: Samsung Electronics Co., Ltd., Suwon-Si, Gyeonggi-do 16677 (KR)
(72) Inventor: The designation of the inventor has not yet been filed
(74) Representative: Gulde & Partner
(86) International application number: PCT/KR2023/002549
(87) International publication number: WO 2023/182678

(57) **Abstract**

According to various embodiments of the disclosure, an electronic device may comprise a first housing; a second housing configured to slide with respect to the first housing; a rollable display including a first display area and a second display area extending from the first display area and including a bending portion which is bent, at least a portion of the second display area being configured to be movable based on a slide of the second housing; and a circuit board disposed at the first housing and including a communication circuit configured to process an RF signal. A lower end wall of the first housing may include a non-metal area spaced apart from the bending portion by a designated distance, wherein at least a portion of the non-metal area faces the bending portion; and at least one metal sheet disposed to cover at least a portion of the non-metal area.

## Description

### [Technical Field]

Various embodiments of the disclosure relate to an electronic device, e.g., an antenna structure and an electronic device including the same.

### [Background Art]

Advancing information communication and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. Such electronic devices become compact enough for users to carry in a convenient way.

As mobile communication services extend up to multimedia service sectors, the display of the electronic device may be increased to allow the user satisfactory use of multimedia services as well as voice call or text messaging services.

### [Disclosure]

### [Technical Problem]

An electronic device (e.g., a portable terminal) may include a display with a flat surface or both a flat and curved surface. An electronic device including a display may have a limitation in realizing a screen larger than the size of the electronic device due to the fixed display structure. Accordingly, research has been conducted on electronic devices including a rollable display.

In an electronic device including a rollable display, at least a portion of the rollable display may be unrolled or rolled when the housing of the electronic device is opened or closed so that the size of the display may be extended or shrunken.

An electronic device including a rollable display requires a separate structure (e.g., a motor structure) for the opening or closing of the housing, so it may be difficult to secure a space for mounting or disposing an antenna structure or an antenna radiator. Accordingly, in an electronic device including a rollable display, an antenna structure or an antenna radiator may be formed in a portion of housings that may slide relative to each other.

When the antenna structure or antenna radiator formed in a portion of the housings is not sufficiently spaced apart from at least a portion (e.g., rolled portion) of the rollable display, the antenna performance may be limited due to interference based on the at least the portion.

According to various embodiments of the disclosure, there may be provided an antenna structure which has antenna performance enhanced by securing a sufficient spacing from the rollable display and an electronic device in the same.

The disclosure is not limited to the foregoing embodiments but various modifications or changes may rather be made thereto without departing from the spirit and scope of the disclosure.

### [Summary of the Invention]

The invention is set out in the appended set of claims.

According to the disclosure, an electronic device comprises a first housing including a first cover member; a second housing configured to slide with respect to the first housing; a rollable display including a first display area and a second display area extending from the first display area, the second display area including a bending portion which is bent, at least a portion of the second display area being configured to be movable based on a slide of the second housing; and a circuit board disposed at the first housing and including a communication circuit configured to process an RF signal. A lower end wall of the first cover member includes at least one area including a non-metal area spaced apart from the bending portion by a designated distance, wherein at least a portion of the non-metal area faces the bending portion; at least one metal sheet disposed to cover at least a portion of the non-metal area; a first metal area connected with a portion of the non-metal area, electrically connected with the circuit board, and coupled with the at least one metal sheet; and a second metal area connected to another portion different from the portion of the non-metal area, coupled with the at least one metal sheet, and electrically connected with the first metal area using the at least one metal sheet. Thus, the metal areas and/or metal sheet of the lower end wall, that act as antenna structures or antenna radiators, are sufficiently spaced part from the second display area of the rollable display. In particular, the part of the electronic device that act as antenna structure or antenna radiator is sufficiently spaced apart by a designated distance from the second display area of the rollable display, thereby enhancing the antenna performance.

According to various embodiments of the disclosure, an electronic device may comprise a first housing; a second housing configured to slide with respect to the first housing; a display including a first display area and a second display area extending from the first display area, at least a portion of the second display area being configured to be movable based on a slide of the second housing; and at least one electric component electrically connected to the first housing. The second display area may include a bending portion which is bent. The first housing may include a lower end wall including a metal area and a non-metal area, at least a portion of the lower end wall spaced apart from the second display area by a designated distance. The designated distance may be 0.9mm or more and 1.1mm or less.

### [Advantageous Effects]

According to various embodiments, it is possible to secure an antenna radiator with enhanced antenna performance in a portion of the housing disposed adjacent to the rolled portion of the rollable display.

According to various embodiments of the disclosure, there may be provided a structure capable of securing rigidity, with at least a portion of the housing sufficiently spaced apart from the rolled portion of the rollable display.

According to various embodiments of the disclosure, the thickness of the housing may be adjusted through a relatively thin metal sheet, so that the thickness (or length) of the housing or the bezel area may be reduced.

Effects of the disclosure are not limited to the foregoing, and other unmentioned effects would be apparent to one of ordinary skill in the art from the following description.

### [Description of the Drawings]

FIG. 1 is a block diagram illustrating an electronic device in a network environment according to various embodiments;
FIG. 2 is a view illustrating a state in which a second display area of a display is received in a housing according to an embodiment of the disclosure;
FIG. 3 is a view illustrating a state in which a second display area of a display is exposed to the outside of a housing according to an embodiment of the disclosure;
FIG. 4 is an exploded perspective view illustrating an electronic device according to an embodiment of the disclosure;
FIG. 5A is a cross-sectional view taken along line A-A' of FIG. 2 according to an embodiment of the disclosure;
FIG. 5B is a cross-sectional view taken along line B-B' of FIG. 3 according to an embodiment of the disclosure;
FIG. 6 is a perspective view illustrating a driving structure according to an embodiment of the disclosure;
FIG. 7 is a view illustrating a first cover member and a second cover member according to various embodiments of the disclosure;
FIG. 8A is a perspective view illustrating a first cover member and a circuit board according to various embodiments of the disclosure;
FIG. 8B is a plan view illustrating a first cover member and electric components according to various embodiments of the disclosure;
FIG. 9A is a cross-sectional view taken along line C-C' of FIG. 5A according to various embodiments of the disclosure;
FIG. 9B is a cross-sectional, perspective view illustrating a metal area and a non-metal area of a first cover member according to various embodiments of the disclosure; and
FIG. 9C is a front view illustrating a metal area and a non-metal area of a first cover member according to various embodiments of the disclosure.

### [Mode for Invention]

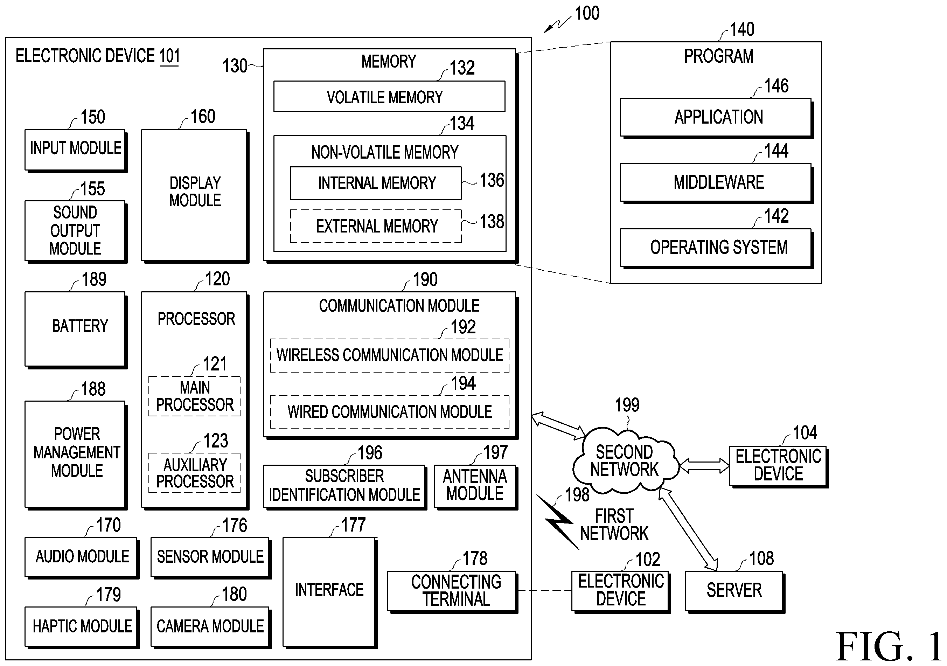

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

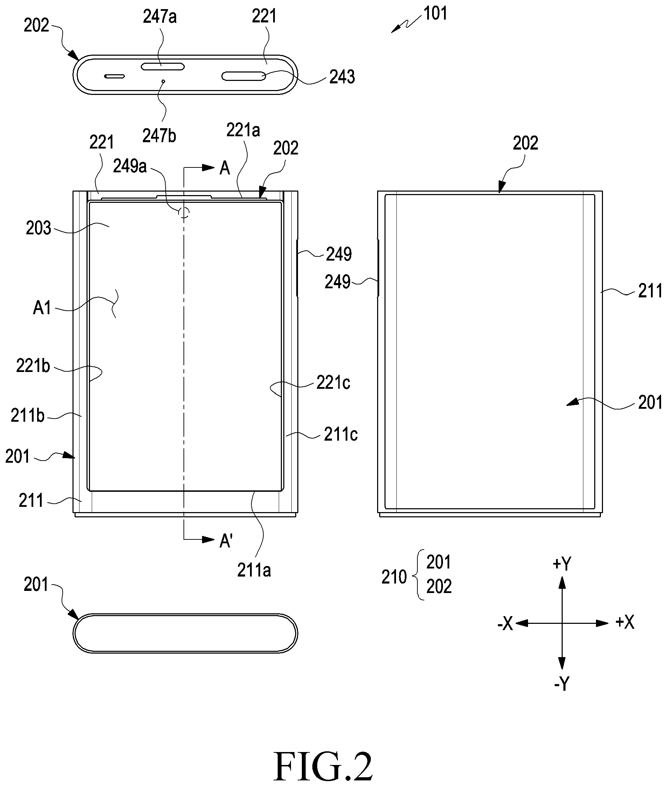

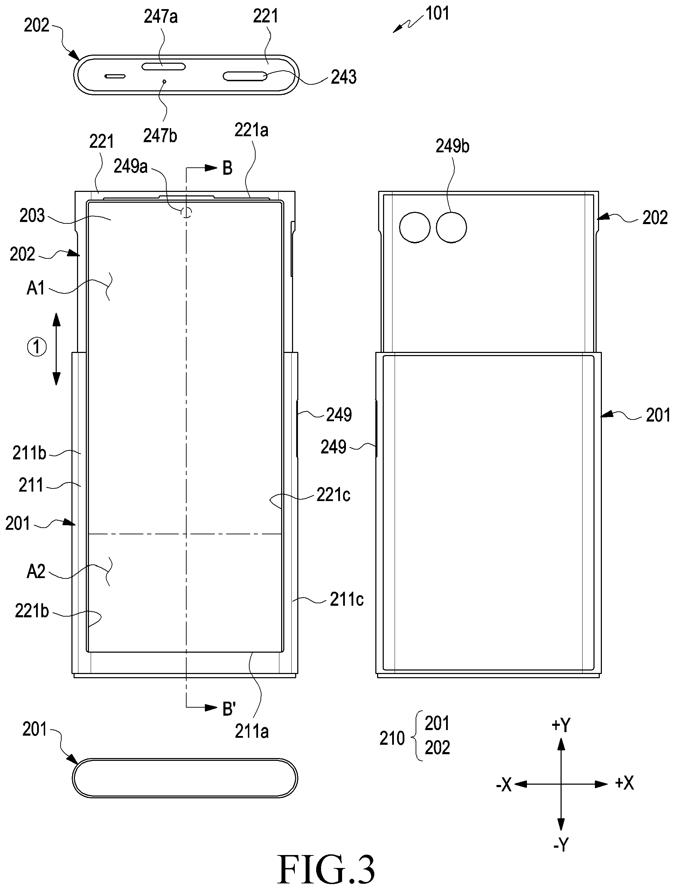

FIG. 2 is a view illustrating a state in which a second display area of a display is received in a housing according to an embodiment of the disclosure. FIG. 3 is a view illustrating a state in which a second display area of a display is exposed to the outside of a housing according to an embodiment of the disclosure.

FIGS. 2 and 3 illustrate a structure in which the display 203 (e.g., flexible display or rollable display) is extended in the length direction (e.g., +Y direction) when the electronic device 101 is viewed from the front. However, the extending direction of the display 203 is not limited to one direction (e.g., +Y direction). For example, the extending direction of the display 203 may be changed in design to be extendable in the upper direction (+Y direction), right direction (e.g., +X direction), left direction (e.g., -X direction), and/or lower direction (e.g., -Y direction).

The state illustrated in FIG. 2 may be referred to as a slide-in state of the electronic device 101 or a state in which the second display area A2 of the display 203 is closed.

The state illustrated in FIG. 3 may be referred to as a slide-out state of the electronic device 101 or a state in which the second display area A2 of the display 203 is opened.

Referring to FIGS. 2 and 3, the electronic device 101 includes a housing 210. The housing 210 includes a first housing 201 and a second housing 202 disposed to be movable relative to the first housing 201. According to an embodiment, the electronic device 101 is interpreted as having a structure in which the first housing 201 is disposed to be slidable with respect to the second housing 202. According to an embodiment, the second housing 202 may be disposed to perform reciprocating motion by a predetermined distance in a predetermined direction with respect to the first housing 201, for example, a direction indicated by an arrow ①.

According to an embodiment, the second housing 202 may be referred to as a slide portion or a slide housing, and is movable relative to the first housing 201. According to an embodiment, the second housing 202 may receive various electrical and electronic components, such as a circuit board or a battery.

According to an embodiment, the first housing 201 may receive a motor, a speaker, a sim socket, and/or a sub circuit board electrically connected with a main circuit board. The second housing 202 may receive a main circuit board on which electric components, such as an application processor (AP) and a communication processor (CP) are mounted.

According to an embodiment, the first housing 201 may include a first cover member 211 (e.g., a main case). The first cover member 211 may include a 1-1th sidewall 211a, a 1-2th sidewall 211b extending from the 1-1th sidewall 211a, and a 1-3th sidewall 211c extending from the 1-1th sidewall 211a and substantially parallel to the 1-2th sidewall 211b. According to an embodiment, the 1-2th sidewall 211b and the 1-3th sidewall 211c may be formed substantially perpendicular to the 1-1th sidewall 211a.

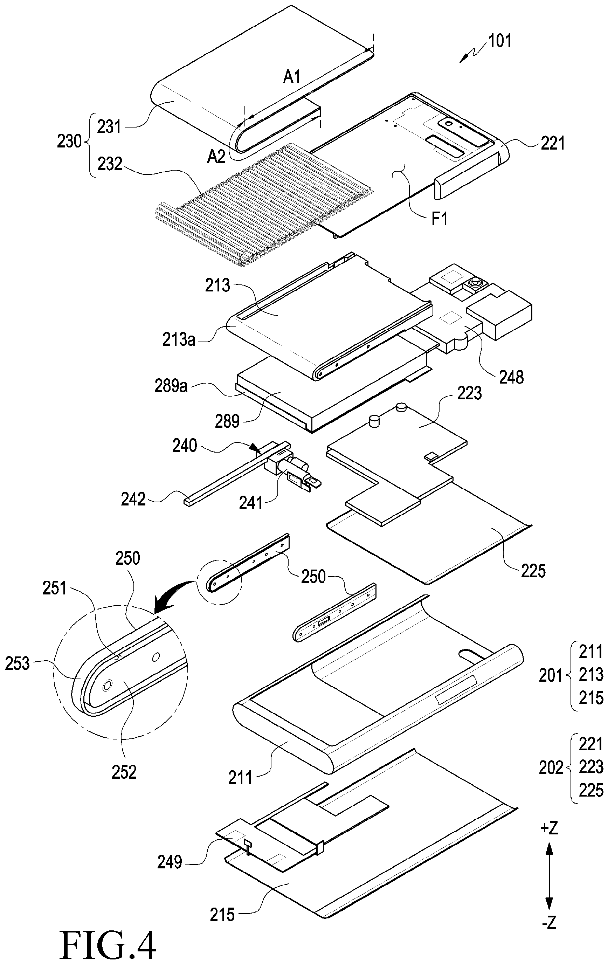

According to an embodiment, the 1-1th sidewall 211a, 1-2th sidewall 211b, and 1-3th sidewall 211c of the first cover member 211 may be formed to have a side opening (e.g., front opening) to receive (or surround) at least a portion of the second housing 202. For example, at least a portion of the second housing 202 may be surrounded by the first housing 201 and be slid in the direction parallel to the first surface (e.g., the first surface F1 of FIG. 4), e.g., arrow ① direction, while being guided by the first housing 201. According to an embodiment, the 1-1th sidewall 211a, the 1-2th sidewall 211b, and/or the 1-3th sidewall 211c of the first cover member 211 may be integrally formed. According to an embodiment, the 1-1th sidewall 211a, the 1-2th sidewall 211b, and/or the 1-3th sidewall 211c of the first cover member 211 may be formed as separate structures and be combined or assembled.

According to an embodiment, the first cover member 211 may be formed to surround at least a portion of the display 203. For example, at least a portion of the display 203 may be formed to be surrounded by the 1-1th sidewall 211a, the 1-2th sidewall 211b, and/or the 1-3th sidewall 211c of the first cover member 211.

According to an embodiment, the second housing 202 may include a second cover member 221 (e.g., a slide plate). The second cover member 221 may have a plate shape and include a first surface (e.g., the first surface F1 of FIG. 4) supporting internal components. For example, the second cover member 221 may support at least a portion of the display 203 (e.g., the first display area A1). According to an embodiment, the second cover member 221 may be referred to as a front cover.

According to an embodiment, the second cover member 221 may include a 2-1th sidewall 221a, a 2-2th sidewall 221b extending from the 2-1th sidewall 221a, and a 2-3th sidewall 221c extending from the 2-1th sidewall 221a and substantially parallel to the 2-2th sidewall 221b. According to an embodiment, the 2-2th sidewall 221b and the 2-3th sidewall 221c may be formed substantially perpendicular to the 2-1th sidewall 221a.

According to various embodiments, as the second housing 202 moves in a first direction (e.g., direction ①) parallel to the 2-2th sidewall 211b or the 2-3th sidewall 211c, the slide-in state and slide-out state of the electronic device 101 may be formed. In the slide-in state of the electronic device 101, the second housing 202 may be positioned at a first distance from the 1-1th sidewall 211a of the first housing 201. In the slide-out state of the electronic device 101, the second housing 202 may move to be positioned at a second distance larger than the first distance from the 1-1th sidewall 211a of the first housing 201. In an embodiment, in the slide-in state of the electronic device 101, the first housing 201 may be formed to surround a portion of the 2-1th sidewall 221a.

According to an embodiment, the electronic device 101 may have an intermediate state between the slide-in state (e.g., fully opened state) of FIG. 2 and the slide-out state (e.g., fully closed state) of FIG. 3. The distance between the 1-1th sidewall 211a and the 2-1th sidewall 221a in the intermediate state of the electronic device 101 may be shorter than the distance between the 1-1th sidewall 211a and the 2-1th sidewall 221a of the electronic device 101 in the fully opened state and be longer than the distance between the 1-1th sidewall 211a and the 2-1th sidewall 221a of the electronic device 101 in the fully closed state. According to an embodiment, as at least a portion of the display 203 slides in the intermediate state of the electronic device 101, the area exposed to the outside may vary. For example, in the intermediate state of the electronic device 101, the ratio of the width (length in the X direction) to the height (length in the Y direction) of the display 203 and/or the distance between the 1-1th sidewall 211a and the 2-1th sidewall 221a may be changed based on the slide of the electronic device 101.

According to an embodiment, the electronic device 101 may include a display 203, a key input device 245, a connector hole 243, audio modules 247a and 247b, or camera modules 249a and 249b. According to an embodiment, the electronic device 101 may further include an indicator (e.g., a light emitting diode (LED) device) or various sensor modules.

According to various embodiments, the display 203 includes a first display area A1 and a second display area A2 configured to be exposed to the outside of the electronic device 101 based on the slide of the second housing 202. According to an embodiment, the first display area A1 may be disposed on the second housing 202. For example, the first display area A1 may be disposed on the second cover member 221 of the second housing 202. According to an embodiment, the second display area A2 extends from the first display area A1, and the second display area A2 may be received in, or visually exposed to the outside of, the first housing 201 as the second housing 202 slides relative to the first housing 201. According to an embodiment, as the electronic device 101 changes from the slide-out state to slide-in state, the display 203 may expand in the lower direction (e.g., -Y direction) of the electronic device 101. For example, in the slide-out state of the electronic device 101, the second display area A2 may be visually exposed under the display 203 (e.g., in the -Y direction). According to an embodiment, as the electronic device 101 changes from the slide-out state to slide-in state, the display 203 may extend in the upper direction (e.g., +Y direction) of the electronic device 101. For example, in the slide-out state of the electronic device 101, the second display area A2 may be visually exposed above the display 203 (e.g., in the +Y direction).

According to an embodiment, the second display area A2 may be received in the space positioned inside the first housing 201 or exposed to the outside of the electronic device while being substantially guided by one area (e.g., the curved surface 213a of FIG. 4) of the first housing 201. According to an embodiment, the second display area A2 may move based on a slide of the second housing 202 in the first direction (e.g., the direction indicated by the arrow ①). For example, while the second housing 202 slides, a portion of the second display area A2 may be deformed into a curved shape in a position corresponding to the curved surface 213a of the first housing 201.

According to an embodiment, as viewed from above the second cover member 221 (e.g., front cover), if the electronic device 101 changes from the slide-in state to slide-out state (e.g., if the second housing 202 slides to extend from the first housing 201), the second display area A2 may be gradually exposed to the outside of the first housing 201 and, together with the first display area A1, form a substantially flat surface. According to an embodiment, the display 203 may be coupled with or disposed adjacent to a touch detection circuit, a pressure sensor capable of measuring the strength (pressure) of touches, and/or a digitizer for detecting a magnetic field-type stylus pen. According to an embodiment, irrespective of the slide-in state or slide-out state of the electronic device 101, the exposed portion of the second display area A2 may be positioned on a portion (e.g., the curved surface 213a of FIG. 4) of the first housing, and a portion of the second display area A2 may remain in the curved shape in the position corresponding to the curved surface 213a.

According to an embodiment, the key input device 245 may be positioned in an area of the housing 210 (e.g., the first housing 201 and/or second housing 202). Depending on the appearance and the state of use, the electronic device 101 may be designed to omit the illustrated key input device 245 or to include additional key input device(s). According to an embodiment, the electronic device 101 may include a key input device (not shown), e.g., a home key button or a touchpad disposed around the home key button. According to an embodiment, at least a portion of the key input device 245 may be disposed on the 1-1th sidewall 211a, the 1-2th sidewall 211b, or the 1-3th sidewall 211c of the first housing 201. According to an embodiment, at least a portion of the key input device 245 may be disposed on the 2-1th sidewall 221a, the 2-2th sidewall 221b, and/or the 2-3th sidewall 221c of the second housing 202.

According to an embodiment, the connector hole 243 may be omitted or may receive a connector (e.g., a universal serial bus (USB) connector) for transmitting and receiving power and/or data with an external electronic device. According to an embodiment (not shown), the electronic device 101 may include a plurality of connector holes 243, and some of the plurality of connector holes 243 may function as connector holes for transmitting/receiving audio signals with an external electronic device. In the illustrated embodiment, the connector hole 243 is disposed in the second housing 202, but is not limited thereto. For example, the connector hole 243 or a connector hole not shown may be disposed in the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound. The microphone may obtain external sound of the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as one hole or may include a speaker without the speaker hole 247a (e.g., a piezo speaker). According to an embodiment, the speaker hole 247a and the microphone hole 247b may be positioned in the first housing 201 and/or the second housing 202.

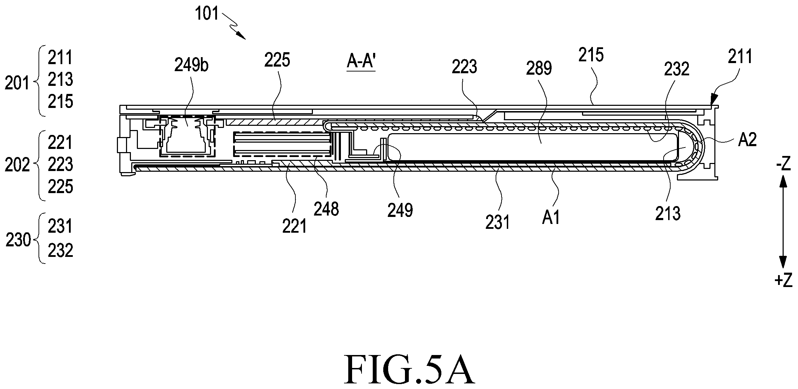

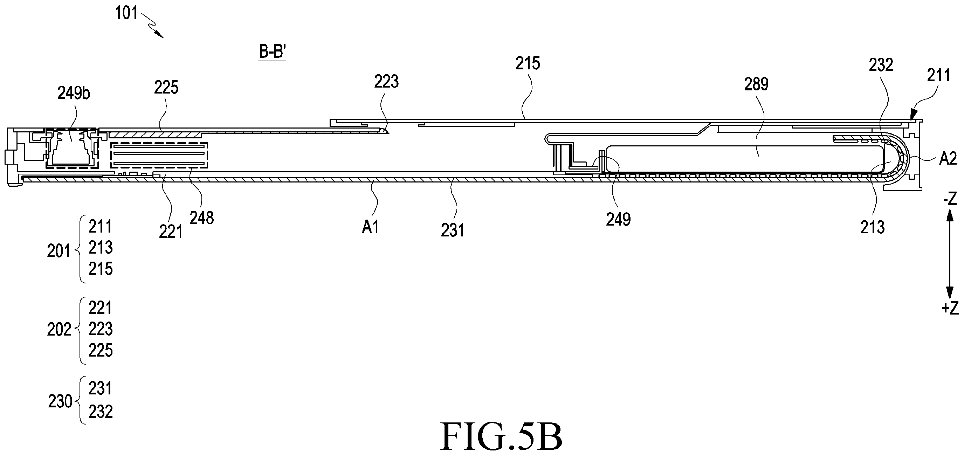

According to an embodiment, the camera modules 249a and 249b may include a first camera module 249a (e.g., a front camera) and a second camera module 249b (e.g., a rear camera) (e.g., the second camera module 249b of FIGS. 5A and 5B). According to an embodiment, the electronic device 101 may include at least one of a wide-angle camera, a telephoto camera, or a close-up camera. According to an embodiment, the electronic device 200 may measure the distance to the subject by including an infrared projector and/or an infrared receiver. The camera modules 249a and 249b may include one or more lenses, an image sensor, and/or an image signal processor. The first camera module 249a may be disposed to face in the same direction as the display 203. For example, the first camera module 249a may be disposed in an area around the first display area A1 or overlapping the display 203. When disposed in the area overlapping the display 203, the first camera module 249a may capture the subject through the display 203. According to an embodiment, the first camera module 249a may include an under display camera (UDC) that has a screen display area (e.g., the first display area A1) that may not be visually exposed but hidden. According to an embodiment, the second camera module 249b may capture the subject in a direction opposite to the first display area A1. According to an embodiment, the first camera module 249a and/or the second camera module 249b may be disposed on the second housing 202. According to an embodiment, a plurality of second camera modules 249b may be formed to provide various arrays. For example, the plurality of second camera modules 249b may be arranged along a width direction (X-axis direction) that is substantially perpendicular to the sliding direction (e.g., Y-axis direction) of the electronic device 101. As another example, the plurality of second camera modules 249b may be arranged along the sliding direction (e.g., Y-axis direction) of the electronic device 101. As another example, the plurality of second camera modules 249b may be arranged along N * M rows and columns like a matrix.

According to an embodiment, the second camera module 249b is not visually exposed to the outside of the electronic device 101 in the slide-in state of the electronic device 101 and, in the slide-out state of the electronic device 101, may capture the outside of the electronic device 101. According to an embodiment, the second camera module 249b may capture the outside of the electronic device 101 in the slide-in state and slide-out state of the electronic device 101. For example, at least a portion (e.g., the first rear plate 215 and/or the second rear plate 225 of FIG. 4) of the housing 210 may be substantially transparent. The second camera module 249b may capture the outside of the electronic device 101 through the first rear plate 215 and/or the second rear plate 225.

According to an embodiment, an indicator (not shown) of the electronic device 101 may be disposed on the first housing 201 or the second housing 202, and the indicator may include a light emitting diode to provide state information about the electronic device 101 as a visual signal. The sensor module (not shown) of the electronic device 101 may produce an electrical signal or data value corresponding to the internal operation state or external environment state of the electronic device. The sensor module may include, for example, a proximity sensor, a fingerprint sensor, or a biometric sensor (e.g., an iris/face recognition sensor or a heartrate monitor (HRM) sensor). According to another embodiment, the sensor module may further include, e.g., at least one of a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor. According to an embodiment, the sensor module may be disposed in the first housing 201 and/or the second housing 202. For example, at least a portion of the sensor module may be positioned in the first housing 201, and another portion thereof may be positioned in the second housing 202.

FIG. 4 is an exploded perspective view illustrating an electronic device according to an embodiment of the disclosure;

FIG. 5A is a cross-sectional view taken along line A-A' of FIG. 2 according to an embodiment of the disclosure.

FIG. 5B is a cross-sectional view taken along line B-B' of FIG. 3 according to an embodiment of the disclosure.

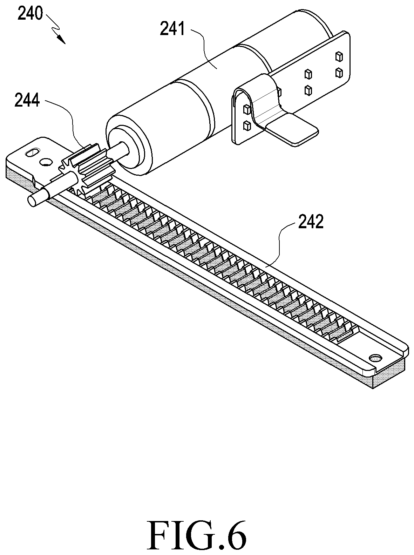

FIG. 6 is a perspective view illustrating a driving structure according to an embodiment of the disclosure.

Referring to FIGS. 4, 5A, 5B, and/or 6, an electronic device 101 may include a first housing 201, a second housing 202, a display assembly 230, and a driving structure 240. The configuration of the first housing 201, the second housing 202, and the display assembly 230 of FIGS. 4, 5A, and/or 5B is identical in whole or part to the configuration of the first housing 201, the second housing 202, and the display 203 of FIGS. 2 and/or 3. The embodiment of FIG. 2 and/or 3 may be partially combined with the embodiment of FIGS. 4, 5A, 5B and/or 6. According to an embodiment, the first housing 201 may include a first cover member 211 (e.g., the first cover member 211 of FIGS. 2 and 3), a frame 213, and a first rear plate 215.

According to an embodiment, the first cover member 211 may receive at least a portion of the frame 213 and receive a component (e.g., battery 289) positioned in the frame 213. According to an embodiment, the first cover member 211 may be formed to surround at least a portion of the second housing 202. According to an embodiment, the first cover member 211 may protect the components (e.g., the second circuit board 249 and the frame 213) positioned in the first housing 201 from external impact. According to an embodiment, the second circuit board 249 receiving the electronic component (e.g., the processor 120 and/or the memory 130 of FIG. 1) may be connected to the first cover member 211.

According to an embodiment, the frame 213 may be connected to the first cover member 211. For example, the frame 213 may be connected to the first cover member 211. The second housing 202 is movable relative to the first cover member 211 and/or the frame 213. According to an embodiment, the frame 213 may receive the battery 289. For example, the frame 213 may include a recess for receiving the battery 289. The frame 213 may be connected to the battery cover 289a and, together with the battery cover 289a, may surround at least a portion of the battery 289. According to an embodiment, the frame 213 may include a curved portion 213a facing the display assembly 230.

According to an embodiment, the first rear plate 215 may substantially form at least a portion of the exterior of the first housing 201 or the electronic device 101. For example, the first rear plate 215 may be coupled to the outer surface of the first cover member 211. According to an embodiment, the first rear plate 215 may provide a decorative effect on the exterior of the electronic device 101. The first rear plate 215 may be formed of at least one of metal, glass, synthetic resin, or ceramic.

According to an embodiment, the second housing 202 may include a second cover member 221 (e.g., the second cover member 221 of FIGS. 2 and 3), a rear cover 223, and a second rear plate 225.

According to an embodiment, the second cover member 221 may be connected to the first housing 201 through the guide rail 250 and, while being guided by the guide rail 250, reciprocate linearly in one direction (e.g., the direction of arrow ①) in FIG. 3).

According to an embodiment, the second cover member 221 may support at least a portion of the display 203. For example, the second cover member 221 may include a first surface F1. The first display area A1 of the display 203 may be substantially positioned on the first surface F1 to maintain a flat panel shape. According to an embodiment, the second cover member 221 may be formed of a metal material and/or a non-metal (e.g., polymer) material. According to an embodiment, the first circuit board 248 receiving the electronic component (e.g., the processor 120 and/or the memory 130 of FIG. 1) may be connected to the second cover member 221. According to an embodiment, the second cover member 221 may protect the components (e.g., the first circuit board 248 and the rear cover 233) positioned in the second housing 202 from external impact.

According to an embodiment, the rear cover 223 may protect a component (e.g., the first circuit board 248) positioned on the second cover member 221. For example, the rear cover 223 may be connected to the second cover member 221 and may be formed to surround at least a portion of the first circuit board 248. According to an embodiment, the rear cover 223 may include an antenna pattern for communicating with an external electronic device. For example, the rear cover 223 may include a laser direct structuring (LDS) antenna.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be formed of at least one of metal, glass, synthetic resin, or ceramic.

According to an embodiment, the display assembly 230 may include a display 231 (e.g., the display 203 of FIGS. 2 and/or 3) and a multi-bar structure 232 supporting the display 203. According to an embodiment, the display 231 may be referred to as a flexible display, a foldable display, and/or a rollable display. According to an embodiment, the first display area A1 of the display 231 may be supported by a rigid body. The second display area A2 may be supported by a bendable structure. For example, the first display area A1 may be supported by the first surface F1 of the second cover member 221 or a plate (not shown). The second display area A2 may be supported by the multi-bar structure 232.

According to an embodiment, the multi-bar structure 232 may be connected to or attached to at least a portion (e.g., the second display area A2) of the display 231. According to an embodiment, as the second housing 202 slides, the multi-bar structure 232 may move with respect to the first housing 201. In the slide-in state of the electronic device 101 (e.g., FIG. 2), the multi-bar structure 232 may be mostly received in the first housing 201 and may be positioned between the first cover member 211 and the second cover member 221. According to an embodiment, at least a portion of the multi-bar structure 232 may move corresponding to the curved surface 213a positioned at the edge of the frame 213. According to an embodiment, the multi-bar structure 232 may be referred to as a display supporting member or supporting structure and may be in the form of one elastic plate.

According to an embodiment, the driving structure 240 may move the second housing 202 relative to the first housing 201. For example, the drive structure 240 (e.g., the driving structure of FIG. 6) may include a motor 241 configured to generate a driving force for sliding the second housing 202 with respect to the first housing 201, for example. The driving structure 240 may include a gear 244 (e.g., a pinion) connected to the motor 241 and a rack 242 configured to mesh with the gear.

According to an embodiment, the housing in which the rack 242 is positioned and the housing in which the motor 241 is positioned may be different. According to an embodiment, the motor 241 may be connected to the second housing 202. The rack 242 may be connected to the first housing 201. According to another embodiment, the motor 241 may be connected to the first housing 201. The rack 242 may be connected to the second housing 202.

According to an embodiment, the motor 241 may be controlled by a processor (e.g., the processor 120 of FIG. 1). For example, the processor 120 may include a motor driver driving circuit and transfer a pulse width modulation (PWM) signal for controlling the speed of the motor 241 and/or the torque of the motor 241 to the motor 241. According to an embodiment, the motor 241 may be electrically coupled to a processor (e.g., the processor 120 of FIG. 1) positioned on the circuit board (e.g., the circuit board 248 or 249 of FIG. 4) using a flexible printed circuit board.

According to an embodiment, the second housing 202 may receive the first circuit board 248 (e.g., a main board). According to an embodiment, the processor, memory, and/or interface may be mounted on the first circuit board 248. The processor may include one or more of, e.g., a central processing unit, an application processor, a graphic processing device, an image signal processing, a sensor hub processor, or a communication processor. According to various embodiments, the first circuit board 248 may include a flexible printed circuit board type radio frequency cable (FRC). The first circuit board 248 may be disposed on at least a portion of the second cover member 221 and may be electrically connected to the antenna module and the communication module.

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the electronic device 101 may include a second circuit board 249 (e.g., a sub circuit board) spaced apart from the first circuit board 248 (e.g., a main circuit board) in the first housing 201. The second circuit board 249 may be electrically connected to the first circuit board 248 through a connection flexible board. The second circuit board 249 may be electrically connected with electric components disposed in an end area of the electronic device 101, such as the battery 289 or a speaker and/or a sim socket, and may transfer signals and power. According to an embodiment, the second circuit board 249 may receive a wireless charging antenna (e.g., a coil) or be connected to the wireless charging antenna. For example, the battery 289 may receive power from an external electronic device through the wireless charging antenna. As another example, the battery 289 may transfer power to the external electronic device by the wireless charging antenna.

According to an embodiment, the battery 289 may be a device for supplying power to at least one component of the electronic device 101. The battery 189 may include a primary cell which is not rechargeable, a secondary cell which is rechargeable, or a fuel cell. The battery 289 may be integrally or detachably disposed inside the electronic device 101. According to an embodiment, the battery 289 may be formed of a single embedded battery or may include a plurality of removable batteries. According to various embodiments, the battery 289 may be position on the frame 213. For example, the battery 289 may be surrounded by the frame 213 and the battery cover 289a. According to another embodiment, it may be positioned within the second housing 202 and is slidable along with the second housing 202.

According to an embodiment, the guide rail 250 may guide the movement of the multi-bar structure 232. For example, the multi-bar structure 232 may slide along the slit 251 formed in the guide rail 250. According to an embodiment, the guide rail 250 may be connected to the first housing 201. For example, the guide rail 250 may be connected to the first cover member 211 and/or the frame 213. According to an embodiment, the slit 251 may be referred to as a groove or recess formed in the inner surface of the guide rail 250.

According to an embodiment, the guide rail 250 may provide a force to the multi-bar structure 232 based on the driving of the motor 241.

According to an embodiment, when the electronic device 101 changes from the slide-in state to slide-out state, the inner portion 252 of the guide rail 250 may provide a force to the multi-bar structure 232. The multi-bar structure 232 receiving the force may be moved along the slit 251 of the guide rail 250, and the second housing 202 may be slid to extend relative to the first housing 201. At least a portion of the display assembly 230 received between the first cover member 211 and the frame 213 may extend to the front surface.

According to an embodiment, when the electronic device 101 changes from the slide-out state to slide-in state, the outer portion 253 of the guide rail 250 may provide a force to the bent multi-bar structure 232. The multi-bar structure 232 receiving the force may be moved along the slit 251 of the guide rail 250, and at least a portion of the second housing 202 may be slid to be received in the first housing 201. At least a portion of the display assembly 230 may be received between the first cover member 211 and the frame 213.

Referring to FIG. 5A, in the slide-in state of the electronic device 101, at least a portion of the second housing 202 may be disposed to be received in the first housing 201. As the second housing 202 is disposed to be received in the first housing 201, the overall volume of the electronic device 101 may be reduced. According to an embodiment, when the second housing 202 is received in the first housing 201, the size of the visually exposed display 231 may be minimized. For example, if the second housing 202 is completely received in the first housing 201, the first display area A1 of the display 231 may be visually exposed, and at least a portion (e.g., a portion along the -Z axis) of the second display area A2 may be disposed between the battery 289 and the first rear plate 215.

Referring to FIG. 5B, in the slide-out state of the electronic device 101, at least a portion of the second housing 202 may protrude from the first housing 201. As the second housing 202 is disposed to protrude from the first housing 201, the overall volume of the electronic device 101 may be increased. According to an embodiment, if the second housing 202 protrudes from the first housing 201, at least a portion of the second display area A2 of the display 231, together with the first display area A1, may be visually exposed to the outside of the electronic device 101.

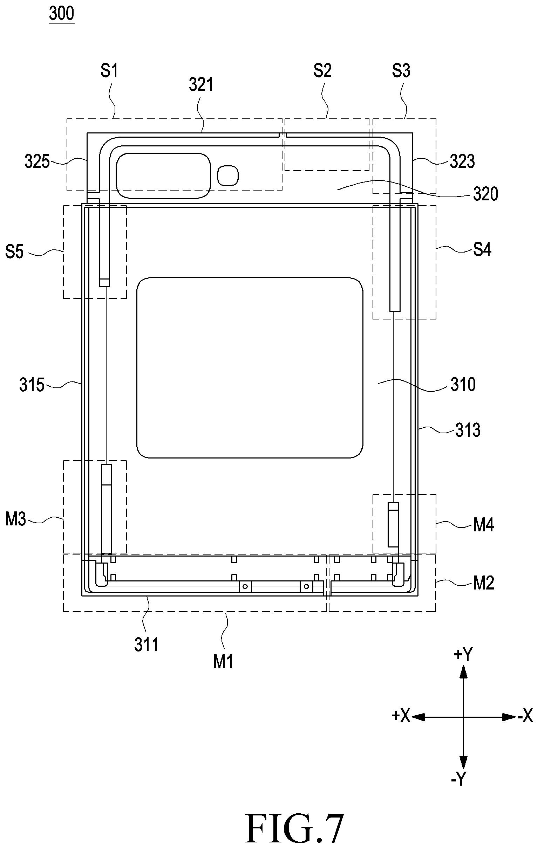

FIG. 7 is a view illustrating a first cover member and a second cover member according to various embodiments of the disclosure.

Referring to FIG. 7, an electronic device 300 (e.g., the electronic device 101 of FIGS. 1 to 5) may include a first cover member 310 and a second cover member 320. The configuration of the first cover member 310 of FIG. 6 may be identical in whole or part to the configuration of the first housing 201 or first cover member 211 of FIG. 4. The configuration of the second cover member 320 of FIG. 6 may be identical in whole or part to the configuration of the second housing 202 or the second cover member 221 of FIG. 4.

According to an embodiment, the second cover member 320 may be configured to slide with respect to the first cover member 310.

According to an embodiment, the first cover member 310 may include a 1-1th sidewall 311 (e.g., the 1-1th sidewall 211 of FIGS. 2 and 3), a 1-2th sidewall 313 (e.g., the 1-2th sidewall 211b of FIGS. 2 and 3), or a 1-3th sidewall 315 (e.g., the 1-3th sidewall 211c of FIGS. 2 and 3).

According to an embodiment, the second cover member 320 may include a 2-1th sidewall 321 (e.g., the 2-1th sidewall 221a of FIGS. 2 and 3), a 2-2th sidewall 323 (e.g., the 2-2th sidewall 221b of FIGS. 2 and 3), or a 2-3th sidewall 325 (e.g., the 2-3th sidewall 221c of FIGS. 2 and 3).

According to an embodiment, the first cover member 310 may include a metal area and a non-metal area. According to an embodiment, at least some of the sidewalls 311, 313, and 315 of the first cover member 310 may include a metal area. The metal area may form at least one antenna radiator M1, M2, M3, and M4. For example, the metal area of the sidewalls 311, 313, and 315 of the first cover member 310 may be electrically connected to a communication module (e.g., the communication module 190 of FIG. 1) or a radio frequency integrated circuit (RFIC) and be configured to transmit and receive antenna signals.

According to an embodiment, the 1-1th sidewall 311 (or the lower end wall) of the first cover member 310 may form a 1-1th antenna radiator M1 or a 1-2th antenna radiator M2. According to an embodiment, the 1-3th sidewall 315 of the first cover member 310 may form a 1-3th antenna radiator M3. According to an embodiment, the 1-2th sidewall 313 of the first cover member 310 may form a 1-4th antenna radiator.

According to an embodiment, the second cover member 320 may include a metal area and a non-metal area. According to an embodiment, at least some of the sidewalls 321, 323, and 325 of the second cover member 320 may include a metal area. The metal area may form at least one antenna radiator S1, S2, and S3. For example, the metal area of the sidewalls 321, 323, and 325 of the first cover member 320 may be electrically connected to a communication module (e.g., the communication module 190 of FIG. 2) or a radio frequency integrated circuit (RFIC) and be configured to transmit and receive antenna signals.

According to an embodiment, the 2-1th sidewall 321 (or the upper end wall) and/or the 2-3th sidewall 325 of the second cover member 320 may form a 2-1th antenna radiator S1. According to an embodiment, the 2-1th sidewall 325 of the second cover member 320 may form a 2-2th antenna radiator S2. According to an embodiment, the 2-1th sidewall 321 and/or the 2-3th sidewall 325 of the second cover member 320 may form a 2-3th antenna radiator S3.

According to an embodiment, the first cover member 310 and the second cover member 320 may form at least one antenna radiator S4 and S5. According to an embodiment, the 3-1th antenna radiator S4 may be formed of a combination of at least a portion of the 1-2th sidewall 313 and at least a portion of the 2-2th sidewall 323 (or a combination of overlapping areas). For example, a connector or guide electrically connecting the 1-2th sidewall 313 and the 2-2th sidewall 323 may be disposed between the 1-2th sidewall 313 and the 2-2th sidewall 323. According to an embodiment, the 3-2th antenna radiator S5 may be formed of a combination of at least a portion of the 2-2th sidewall 315 and at least a portion of the 3-2th sidewall 325 (or a combination of overlapping areas). For example, a connector or guide electrically connecting the 1-3th sidewall 315 and the 2-3th sidewall 325 may be disposed between the 1-3th sidewall 315 and the 2-3th sidewall 325.

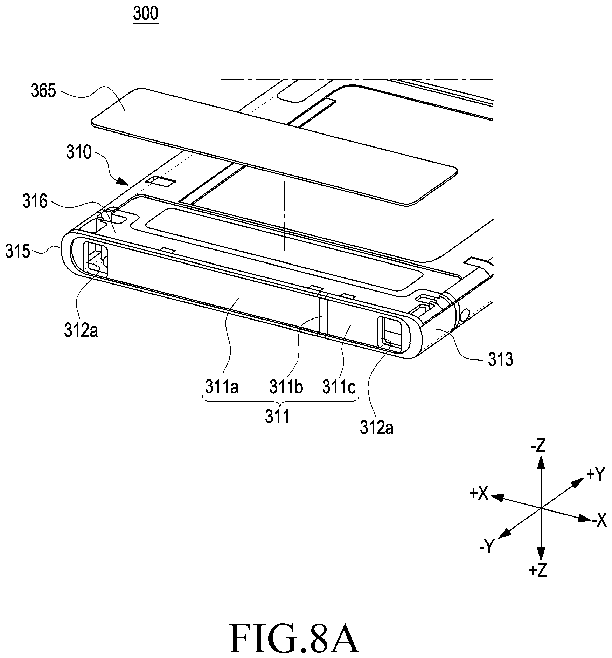

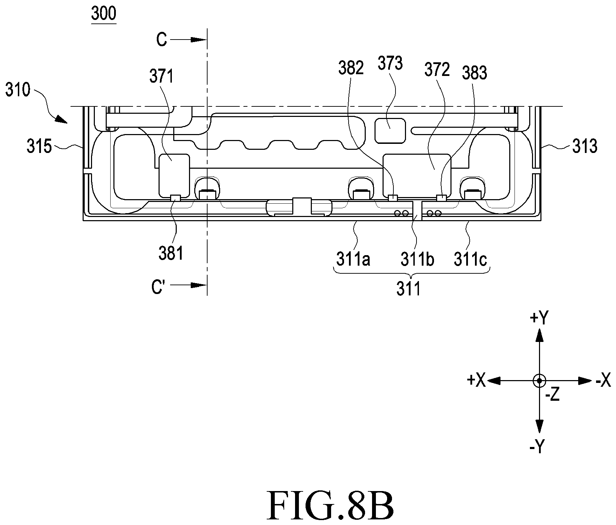

FIG. 8A is a perspective view illustrating a first cover member and a circuit board according to various embodiments of the disclosure. FIG. 8B is a plan view illustrating a first cover member and electric components according to various embodiments of the disclosure.

Referring to FIGS. 8A and 8B, an electronic device 300 (e.g., the electronic device 101 of FIGS. 1 to 5B) may include a first cover member 310, a circuit board 365, at least one electric component 371, 372, and 373, and/or at least one connector 381, 382, and 383.

The configuration of the first cover member 310 of FIGS. 8A and 8B may be identical in whole or part to the configuration of the first cover member 211 of FIG. 4 or the first cover member 310 of FIG. 7. The configuration of the circuit board 365 of FIGS. 8A and 8B may be identical in whole or part to the configuration of the second circuit board 249 of FIG. 4.

According to various embodiments, the first cover member 310 may be a component for guiding the slide of the second cover member (e.g., the second cover member 211 of FIG. 4). According to an embodiment, the first cover member 310 may include a first flat surface portion 316, a first sidewall 311, a second sidewall 313, and a third sidewall 315.

According to various embodiments, the first flat surface portion 316 of the first cover member 310 may be a portion forming the body of the first cover member 310. According to an embodiment, the first rear plate (e.g., the first rear plate 215 of FIG. 4) may be coupled to the first flat surface portion 316. According to an embodiment, a recess may be formed in at least one portion of the first flat surface portion 316. The circuit board 365 may be disposed or seated in the recess of the first flat surface portion 316.

According to various embodiments, the first sidewall 311 (e.g., the 1-1th sidewall 211a of FIGS. 2 to 3) of the first cover member 310 may be a portion extending from one end (e.g., the end in the -Y direction of FIG. 8A) of the first flat surface portion 316. According to an embodiment, the first sidewall 311 may be a portion covering at least a portion (e.g., the rolled portion of the second display area) of the second display area (e.g., the second display area A2 of FIG. 4).

According to various embodiments, the first sidewall 311 may include a conductive portion. According to an embodiment, the conductive portion of the first sidewall 311 may be used as an antenna radiator (e.g., the antenna module 197 of FIG. 1). In an embodiment, the conductive portion of the first sidewall 311 may include at least one of stainless steel or aluminum. In an embodiment, the first side wall 311 may be defined and referred to as a lower end wall of the first cover member 310.

According to various embodiments, the second sidewall 313 (e.g., the 1-2th sidewall 211b of FIGS. 2 to 3) of the first cover member 310 may extend from the first sidewall 311. According to an embodiment, the second sidewall 313 may extend in a direction (e.g., the Y-axis direction of FIG. 8A) perpendicular to the first sidewall 311. According to an embodiment, in the closed state of the electronic device 300, the second sidewall 313 may cover at least a portion of the 2-2th sidewall (e.g., the 1-2th sidewall 221b of FIGS. 2 and 3) of the second cover member (e.g., the second cover member 221 of FIG. 4).

According to various embodiments, the third sidewall 315 (e.g., the 1-3th sidewall 211c of FIGS. 2 and 3) of the first cover member 310 may extend from the first sidewall 311. According to an embodiment, the third sidewall 315 may extend in a direction (e.g., the Y-axis direction of FIG. 8A) perpendicular to the first sidewall 311. According to an embodiment, the third sidewall 315 may be disposed substantially parallel to the second sidewall 313. According to an embodiment, in the closed state of the electronic device 300, the third sidewall 313 may cover at least a portion of the 2-3th sidewall (e.g., the 2-3th sidewall 221c of FIGS. 2 and 3) of the second cover member (e.g., the second cover member 221 of FIGS. 2 to 4).

According to various embodiments, the first sidewall 311 may include a first area 311a, a second area 311b, and a third area 311c. In an embodiment, the first area 311a, the second area 311b, and the third area 311c may form a substantially flat surface.

In an embodiment, the first area 311a may be disposed on one side of the second area 311b which is a non-metal area of the first sidewall 311, and the third area 311c may be disposed on the other side thereof. In an embodiment, the length (e.g., the length in the X-axis direction of FIG. 8A) of the first area 311a may be larger than the length (e.g., the length in the X-axis direction of FIG. 8A) of the third area 311c, with respect to the width direction (e.g., the X-axis direction of FIG. 8A) of the first sidewall 311.

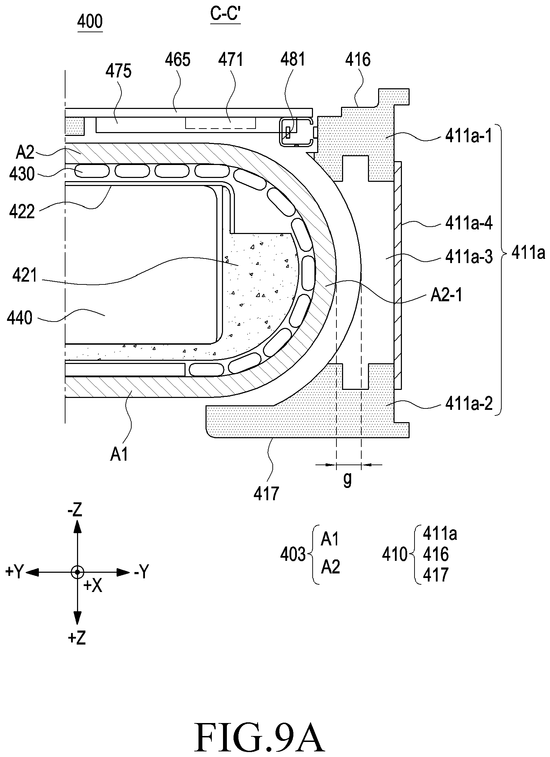

According to an embodiment, the first area 311a may be a portion connected to the third sidewall 315 or a portion extending from one end (e.g., the end in the -Y direction of FIG. 8A) of the third sidewall 315. According to an embodiment, at least a portion of the first area 311a may be configured of a metal area (e.g., the first metal areas 411a-1, 41 1a-2, and 411a-4 of FIG. 9A), and the rest may be configured of a non-metal area (e.g., the first non-metal area 41 1a-3 of FIG. 9A). According to an embodiment, the metal area of the first area 311a may be used as an antenna radiator of the electronic device 300. For example, the metal area of the first area 311a may be used as the first antenna radiator.

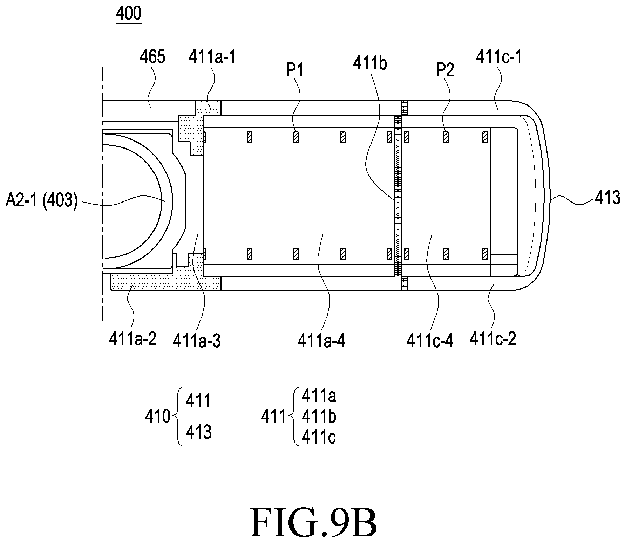

According to an embodiment, the third area 311c may be a portion connected to the second sidewall 313 or a portion extending from one end (e.g., the end in the -Y direction of FIG. 8A) of the second sidewall 313. According to an embodiment, at least a portion of the third area 311c may be configured of a metal area (e.g., the third metal areas 411c-1, 411c-2, and 411c-4 of FIG. 9B), and the rest may be configured of a non-metal area (e.g., the third non-metal area). According to an embodiment, the metal area of the third area 311c may be used as an antenna radiator of the electronic device 300. For example, the metal area of the third area 311c may be used as a second antenna radiator different from the first antenna radiator.

According to an embodiment, the second area 311b may be connected to the first area 311a and the third area 311c. According to an embodiment, the second area 311b may be a non-metal area formed of a non-metal material (e.g., a polymer or a non-conductive material (e.g., resin)). In an embodiment, the second area 311b may be referred to as a segmental portion, a segmented portion, a segmented area, a non-metal portion, or a non-conductive portion.

According to an embodiment, the second area 311b may extend from the first flat surface portion 316 of the first cover member 310 to the second flat surface portion (e.g., the second flat surface portion 417 of FIG. 8A).

According to an embodiment, the first area 311a and/or the third area 311c may further include an opening 312a formed through at least one portion thereof.

According to various embodiments, the circuit board 365 may be disposed on the first flat surface portion 316. For example, the circuit board 365 may be seated or disposed in a recess formed in the first flat surface portion 316. According to an embodiment, the circuit board 365 may be configured as a sub printed circuit board (sub PCB) and may be electrically connected to a main circuit board (main PCB) (e.g., the first circuit board 248 of FIG. 4) on which the processor and/or memory are mounted. For example, the circuit board 365 may be electrically connected to the main circuit board through a coaxial cable or a flexible printed circuit board (PCB).

According to an embodiment, the circuit board 365 may be disposed on the first cover member 310 and may include a communication circuit for processing RF signals. For example, the circuit board 365 may further include a radio frequency integrated circuit (RFIC) including the communication circuit.

FIG. 8B is a view illustrating a disposition relationship of at least one electric component 371, 372, and 373 and at least one connector 381, 382, and 383 on a first flat surface portion 316 of the first cover member 310.

According to various embodiments, the at least one electric component 371, 372, and 373 may be disposed or mounted on one surface (e.g., the surface facing in the +Z direction of FIG. 8A) of the circuit board 365.

According to an embodiment, the at least one electric component 371, 372, and 373 may be defined and interpreted as a component included in the circuit board 365. For example, the at least one electric component 371, 372, and 373 may be defined and interpreted as a sub component of the circuit board 365. According to an embodiment, the at least one electrical component 371, 372, and 373 may be defined and interpreted as a component separate from the circuit board 365.

According to various embodiments, the at least one connector 381, 382, and 383 may electrically connect the circuit board 365 or at least one electric component 371, 372, and 373 disposed on the circuit board 365 to the first area 311a or third area 311c.

According to various embodiments, at least one electric component 371, 372, and 373 may include a first electric component 371, a second electric component 372, and a third electric component 373 that are disposed on one surface (e.g., the surface facing in the +Z direction of FIG. 8A) of the circuit board 365 and spaced apart from each other.

According to various embodiments, at least one connector 381, 382, and 383 may include a first connector 381, a second connector 382, and a third connector 383 that are disposed on the circuit board 365 and spaced apart from each other.

According to an embodiment, the first electric component 371 may be disposed on one surface (e.g., the surface facing in the +Z direction of FIG. 8A) of the circuit board 371 and may be electrically connected to the metal area of the first area 311a of the first sidewall 311. For example, the first electric component 371 may include a radio frequency integrated circuit (RFIC) configured to transmit signals to an external electronic device or receive signals from the external electronic device using at least a portion of the metal area of the first area 311a. For example, the first electric component 371 may be electrically connected to the metal area of the first area 311a through the first connector 381.

According to an embodiment, the second electric component 372 may be disposed on one surface (e.g., the surface facing in the +Z direction of FIG. 8A) of the circuit board 365 and may be electrically connected to the metal area of the first area 311a or the metal area of the third area 311c of the first sidewall 311. For example, the second electric component 372 may include a radio frequency integrated circuit (RFIC) configured to transmit signals to an external electronic device or receive signals from the external electronic device using at least a portion of the metal area of the first area 311a or at least a portion of the metal area of the third area 311c. For example, the second electric component 372 may be electrically connected to the metal area of the first area 311a through the second connector 382 or be electrically connected to the metal area of the third area 311c through the third connector 383.

According to an embodiment, the third electric component 373 may be disposed on one surface (e.g., the surface facing in the +Z direction of FIG. 8A) of the circuit board 365. For example, the third electric component 373 may include a low-noise amplifier (e.g., LNA) for amplifying the weak signal received through the metal area of the first area 311a or the metal area of the third area 311c.

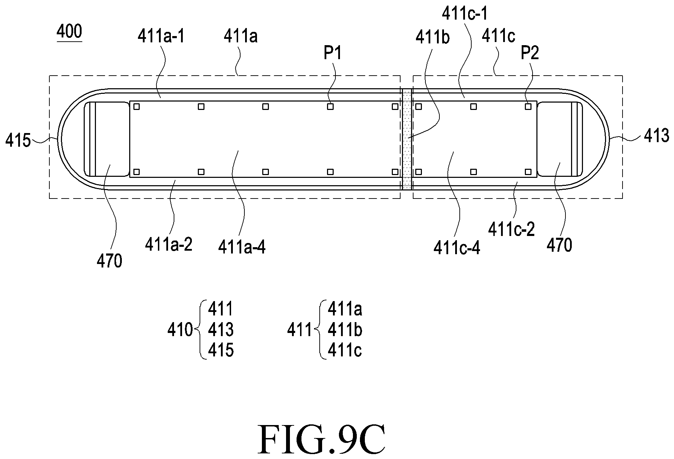

FIG. 9A is a cross-sectional view taken along line C-C' of FIG. 8A according to various embodiments of the disclosure. FIG. 9B is a cross-sectional, perspective view illustrating a metal area and a non-metal area of a first cover member according to various embodiments of the disclosure. FIG. 9C is a front view illustrating a metal area and a non-metal area of a first cover member according to various embodiments of the disclosure.

Referring to FIGS. 9A to 9C, an electronic device 400 (e.g., the electronic device 101 of FIGS. 1 to 5 or the electronic device 300 of FIGS. 8A to 8B) may include a display 403, a first cover member 410, a multi-bar structure 430, a battery 440, a frame 421, a battery cover 422, a guide rail 470, a circuit board 465, a first electric component 471, and/or a first connector 481.

The configuration of the display 403, the supporting structure 430, the battery 440, the frame 421 and/or the battery cover 422 of FIGS. 9A to 9C may be identical in whole or part to the configuration of the display 231, the multi-bar structure 232, the battery 289, the frame 213, the battery cover 289a, and/or the guide rail 250 of FIG. 4. The first cover member 410, the circuit board 465, the first electric component 471, and/or the first connector 481 of FIGS. 9A to 9C may be identical in whole or part to the first cover member 310, the circuit board 365, the first electric component 371, and/or the first connector 381 of FIGS. 8A and 8B.

According to various embodiments, the display 403 includes a first display area A1 (e.g., the first display area A1 of FIG. 4) connected to the second housing (e.g., the second cover member 221 of FIG. 4) and a second display area A2 (e.g., the second display area A2 of FIG. 4) extending from the first display area A1.

According to an embodiment, the second display area A2 may be supported by the multi-bar structure 430 (e.g., the supporting structure 232 of FIG. 3). According to an embodiment, the second display area A2 may be disposed such that at least one portion A2-1 is rolled. For example, the second display area A2 may be disposed so that a portion facing or positioned opposite the curved surface (e.g., the curved surface facing in the -Y direction of FIG. 6A or the curved surface 213a of FIG. 4) of the frame 421 (e.g., the frame 213 of FIG. 4) is rolled. In an embodiment, the second display area A2 may include a bending portion A2-1 in which the area positioned opposite or facing the curved surface of the guide frame 421 is bent.

According to an embodiment, the battery 440 (e.g., the battery 289 of FIG. 3) may be received in the frame 421 and be covered by the battery cover 422 (e.g., the battery cover 289a of FIG. 4).

According to various embodiments, the first electric component 471 (e.g., the first electric component 371 of FIG. 8B), the second electric component (e.g., the second electric component 372 of FIG. 8B), and the third electric component (e.g., the third electric component 373 of FIG. 8B) may be disposed or mounted on one surface (e.g., the surface facing in the +Z direction of FIG. 9A) of the circuit board 465.

According to various embodiments, the electronic device 400 may further include a shielding member 475 disposed on one surface (e.g., the surface facing in the +Z direction of FIG. 9A) of the circuit board 365. According to an embodiment, the shielding member 475 may include a shield can that covers the first electric component 471, the second electric component, and/or the third electric component.

According to various embodiments, the first cover member 410 (e.g., the first cover member 310 of FIGS. 8A and 8B) may include a first sidewall 411 (e.g., the first sidewall 311 of FIGS. 8A and 8B), a second sidewall 413 (e.g., the second sidewall 313 of FIGS. 8A and 8B), a third sidewall 415 (e.g., the third sidewall 415 of FIGS. 8A and 8B), a first flat surface portion 416 (e.g., the first flat surface 316 of FIGS. 8A and 8B), and/or a second flat surface portion 417. According to an embodiment, the first flat surface portion 416 and the second flat surface portion 417 may be disposed to face in opposite directions to each other and be disposed parallel to each other. In an embodiment, the second flat surface portion 417 may be defined and/or interpreted as a bezel area or a bezel structure of the electronic device 400.

According to an embodiment, the second flat surface portion 417 may be disposed such that at least one portion thereof covers at least a portion of the display 403.

According to an embodiment, the first sidewall 411 may include a first area 411a (e.g., the first area 311a of FIGS. 8A and 8B), a second area 411b (e.g., the second area 311b of FIGS. 8A and 8B), and/or a third area 411c (e.g., the third area 311c of FIGS. 8A and 8B).

According to an embodiment, the first area 411a includes a first metal area 411a-1, 411a-2, and 411a-4 and a first non-metal area 411a-3. According to an embodiment, the first metal area 411a-1, 411a-2, and 411a-4 may include a 1-lth metal area 411a-1, a 1-2th metal area 411a-2, and/or a 1-3th metal area 411a-4. According to an embodiment, the first metal area 411a-1, 411a-2, and 411a-4 may include at least one of stainless steel or aluminum.

According to an embodiment, the first non-metal area 411a-3 may be molded together with the 1-1th metal area 411a-1 and the 1-2th metal area 411a-2 through insert injection molding. According to an embodiment, the first non-metal area 411a-3 may be formed of a non-metal material (e.g., a polymer or a non-conductive material (e.g., a resin)).

In an embodiment, the 1-1th metal area 411a-1 may be coupled to one side (e.g., the portion facing in the -Z direction of FIG. 9A) of the first non-metal area 411a-3, and the 1-2th metal area 411a-2 may be coupled to the other side (e.g., the portion facing in the +Z direction of FIG. 9A) of the first non-metal area 411a-3.

In an embodiment, at least a portion of the first non-metal area 411a-3, the 1-1th metal area 411a-1, and the 1-2th metal area 411a-2 may form a curved surface so that a portion thereof, facing the bending portion A2-1 of the display 403, has a curvature corresponding to the bending portion A2-1. In an embodiment, at least a portion of the first non-metal area 411a-3, the 1-1th metal area 411a-1, and the 1-2th metal area 411a-2 may be spaced apart from the bending portion A2-1 of the display 403 that it faces by a designated distance g. The designated distance g may be about 0.9 mm or more. In a preferred embodiment, the designated distance g may be about 0.9 mm to about 1.1 mm. It should be noted that the preferred embodiment may additionally include any further preferred sub-embodiment in which the designated distance g may, for example, be about 0.95mm to about 1.05mm and the like.

In an embodiment, the 1-3th metal area 411a-4 may be disposed to cover at least a portion (e.g., the portion facing in the -Y direction of FIG. 9A) of the first non-metal area 411a-3, the 1-1th metal area 411a-1, and the 1-2th metal area 411a-2. In an embodiment, an end (e.g., the end facing in the -Z direction of FIG. 9A) of the 1-3th metal area 411a-4 may be connected and/or coupled to the 1-1th metal area 411a-1, and the other end (e.g., the end facing in the +Z direction of FIG. 6A) may be connected and/or coupled to the 1-2th metal area 411a-2. In an embodiment, the 1-3th metal area 411a-4 may be a metal sheet. In an embodiment, the one end and the other end of the 1-3th metal area 411a-4 may be coupled to the 1-1th metal area 411a-1 and the 1-2th metal area 411a-2, respectively, through ultrasonic fusion P1. According to an embodiment, the one end and the other end of the 1-3th metal area 411a-4 may be coupled to the 1-1th metal area 411a-1 and the 1-2th metal area 411a-2, respectively, through various coupling type.

According to an embodiment, the stiffness (e.g., second stiffness) of the 1-3th metal area 411a-4 formed of the metal sheet may be larger than the stiffness (e.g., first stiffness) of the 1-1th metal area 411a-1 and the 1-2th metal area 411a-2.

According to an embodiment, the third area 411c includes a third metal area and a third non-metal area. According to an embodiment, the third metal area may include a 3-1th metal area 411c-1, a 3-2th metal area 411c-2, and/or a 3-3th metal area 411c-4. According to an embodiment, the third metal area 411c-1, 411c-2, and 411c-4 may include at least one of stainless steel or aluminum.

According to an embodiment, the third non-metal area may be molded together with the 3-1th metal area 411c-1 and the 3-2th metal area 411c-2 through insert injection molding. According to an embodiment, the third non-metal area may be formed of a non-metal material (e.g., a polymer or a non-conductive material (e.g., a resin)).

According to an embodiment, the cross-sectional shape of the third area 411c (e.g., a cross-sectional shape on the plane formed of the Y-axis and the Z-axis of FIG. 9A) may be identical in whole or part to the cross-sectional shape of the first area 411a. For example, the cross-sectional shape of the third non-metal area of the third area 411c may be identical in whole or part to the cross-sectional shape of the first non-metal area 411a-3 illustrated in FIG. 9A. The cross-sectional shape of the 3-1th metal area 411c-1 of the third area 411c may be identical in whole or part to the cross-sectional shape of the 1-1th metal area 411a-1 illustrated in FIG. 9A. The cross-sectional shape of the 3-2th metal area 411c-2 of the third area 411c may be identical in whole or part to the cross-sectional shape of the 3-2th metal area 411a-2 illustrated in FIG. 9A. The cross-sectional shape of the 3-3th metal area 411c-4 of the third area 411c may be identical in whole or part to the cross-sectional shape of the 1-3th metal area 411c-4 illustrated in FIG. 9A.

According to an embodiment, the third non-metal area may be molded together with the 3-1th metal area 411c-1 and the 3-2th metal area 411c-2 through insert injection molding. According to an embodiment, the third non-metal area may be formed of a non-metal material (e.g., a polymer or a non-conductive material (e.g., a resin)).

In an embodiment, the 3-1th metal area 411c-1 may be coupled to one side (e.g., the portion facing in the -Z direction of FIG. 9A) of the third non-metal area, and the 3-2th metal area 411c-2 may be coupled to the other side (e.g., the portion facing in the +Z direction of FIG. 9A) of the third non-metal area 411a-3.

In an embodiment, at least one portion of the third non-metal area, the 3-1th metal area 411c-1, and the 3-2th metal area 411c-2 may form a curved surface so that a portion thereof, facing the bending portion A2-1 of the display 403, has a curvature corresponding to the bending portion A2-1. In an embodiment, at least a portion of the third non-metal area, the 3-1th metal area 411c-1, and the 3-2th metal area 411c-2 may be spaced apart from the bending portion A2-1 of the display 403 that it faces by a designated distance g. The designated distance g may be about 0.9 mm or more. In a preferred embodiment, the designated distance g may be about 0.9 mm to about 1.1 mm. It should be noted that the preferred embodiment may additionally include any further preferred sub-embodiment in which the designated distance g may, for example, be about 0.95mm to about 1.05mm and the like.

In an embodiment, the 3-3th metal area 411c-4 may be disposed to cover at least a portion (e.g., the portion facing in the -Y direction of FIG. 9A) of the third non-metal area, the 3-1th metal area 411c-1, and the 3-2th metal area 411c-2. In an embodiment, an end (e.g., the end facing in the -Z direction of FIG. 9A) of the 3-3th metal area 411c-4 may be connected and/or coupled to the 3-1th metal area 411c-1, and the other end (e.g., the end facing in the +Z direction of FIG. 9A) may be connected and/or coupled to the 3-2th metal area 411c-2. In an embodiment, the 3-3th metal area 411c-4 may be a metal sheet. In an embodiment, the one end and the other end of the 3-3th metal area 411c-4 may be coupled to the 3-1th metal area 411c-1 and the 3-2th metal area 411c-2, respectively, through ultrasonic fusion P2. According to an embodiment, the one end and the other end of the 3-3th metal area 411c-4 may be coupled to the 3-1th metal area 411c-1 and the 3-2th metal area 411c-2, respectively, through various coupling type.

According to an embodiment, the stiffness (e.g., second stiffness) of the 3-3th metal area 411c-4 formed of the metal sheet may be larger than the stiffness (e.g., first stiffness) of the 3-1th metal area 411c-1 and the 3-2th metal area 411c-2.

According to an embodiment, at least a portion of the 1-3th metal area 411a-4 formed of a metal sheet may be disposed to cover at least a portion of the first non-metal area 411a-3. At least a portion of the 3-3th metal area 411c-4 formed of a metal sheet may be disposed to cover at least a portion of the third non-metal area.

According to an embodiment, the second area 411b may be defined and/or interpreted as an area dividing the first area 411a and the third area 411c. In an embodiment, the second area 411b may be defined and/or interpreted as a second non-metal area or segmental portion including a non-metal material.

According to an embodiment, the 1-1th metal area 411a-1 may be electrically connected to the 1-3th metal area 411a-4 and may be electrically connected through the 1-2th metal area 411a-2 and the 1-3th metal area 411a-4. In an embodiment, the 1-1th metal area 411a-1, the 1-2th metal area 411a-2, and the 1-3th metal area 411a-4 may constitute the first antenna radiator. In an embodiment, the first antenna radiator may be electrically connected to the first electric component 471 through the first connector 481 or be electrically connected to the second electric component (e.g., the second electric component 372 of FIG. 8B) through the second connector (e.g., the second connector 382 of FIG. 8B). In an embodiment, the first electric component 471 (e.g., an RFIC) may transmit signals to an external electronic device or receive signals from the external electronic device through the first antenna radiator. In an embodiment, the second electric component (e.g., the second electric component 372 (e.g., an RFIC) of FIG. 8B) may transmit signals to an external electronic device or receive signals from the external electronic device through the first antenna radiator.

According to an embodiment, the 3-1th metal area 411c-1 may be electrically connected to the 3-3th metal area 411c-4 and be electrically connected through the 3-2th metal area 411c-2 and the 3-3th metal area 41 1c-4. In an embodiment, the 3-1th metal area 411c-1, the 3-2th metal area 41 1c-2, and the 3-3th metal area 411c-4 may constitute the second antenna radiator. In an embodiment, the second antenna radiator may be electrically connected to the second electric component (e.g., the second electric component 372 of FIG. 8B) through the third connector (e.g., the third connector 373 of FIG. 8B). In an embodiment, the second electric component (e.g., the second electric component 372 (e.g., an RFIC) of FIG. 8B) may transmit signals to an external electronic device or receive signals from the external electronic device through the second antenna radiator.

According to an embodiment, the first electric component 471 may be configured to transmit/receive an antenna signal of a first wavelength band, and the second electric component (e.g., the second electric component 372 of FIG. 8B) may be configured to transmit/receive an antenna signal of a second wavelength band that is a different wavelength band from the first wavelength band.

According to various embodiments, the first area 411a and/or the third area 411c may be spaced apart from the bending portion A2-1 of the display 403 by a designated distance g. According to an embodiment, the designated distance g may be about 0.9 mm or more. In a preferred embodiment, the designated distance g may be about 0.9 mm to about 1.1 mm. It should be noted that the preferred embodiment may additionally include any further preferred sub-embodiment in which the designated distance g may, for example, be about 0.95mm to about 1.05mm and the like. According to an embodiment, as the first area 411a and/or the third area 411c is spaced apart from the bending portion A2-1 of the display 403 by the designated distance g, the first antenna radiator formed by the first area 411a and/or the second antenna radiator formed by the third area 411c may be prevented or restricted from interference by the display 403. Since the first antenna radiator and/or the second antenna radiator are sufficiently spaced apart from the display 403, antenna performance may be enhanced.

According to various embodiments, as the 1-4th metal area 41 1a-4 of the first area 411a is configured of a metal sheet having a relatively small thickness, it is possible to prevent or limit an increase in the thickness (e.g., the thickness in the Y-axis direction of FIG. 9A) of the first area 411a and to secure sufficient stiffness for the first area 411a. According to various embodiments, as the 3-4th metal area 411c-4 of the third area 411c is configured of a metal sheet having a relatively small thickness, it is possible to prevent or limit an increase in the thickness (e.g., the thickness in the Y-axis direction of FIG. 9A) of the third area 411a and to secure sufficient stiffness for the third area 411a.

According to an embodiment, the circuit board 465 may be electrically connected to the main circuit board (e.g., the first circuit board 248 of FIG. 4) electrically connected to the communication module (e.g., the communication module 190 of FIG. 1). Accordingly, the communication module may be connected to the 1-1th metal area 411a-1 and the 3-1th metal area 411c-1 through the main circuit board, circuit board 465 and at least one connector 481 (or at least one connector 381, 382, and 383 in FIG. 8B).

According to an aspect of the disclosure, an electronic device may comprise a first housing (e.g., the first housing 201 of FIGS. 2 to 4) including a first cover member (e.g., the first cover member 211 of FIG. 4 or the first cover member 310 of FIGS. 8A and 8B); a second housing (e.g., the second housing 202 of FIGS. 2 to 4 or the second cover member 221 of FIG. 4) configured to slide with respect to the first housing; a rollable display (e.g., the display 203 of FIGS. 2 to 4) including a first display area (e.g., the first display area A1 of FIGS. 2 to 4) and a second display area (e.g., the second display area A2 of FIGS. 2 to 4 or the second display area A2 of FIG. 9A) extending from the first display area, the second display area including a bending portion (e.g., the bending portion A2-1 of FIG. 9A) which is bent, and at least a portion of the second display area being configured to be movable based on a slide of the second housing; and a circuit board (e.g., the second circuit board 249 of FIG. 4 or the circuit board 365 of FIG. 8A) disposed at the first housing and including a communication circuit configured to process an RF signal. A lower end wall (e.g., the 1-1th sidewall 311 of FIG. 7 or the first sidewall 311 of FIG. 8A) of the first cover member includes: a non-metal area (e.g., the first non-metal area 411a-3 of FIG. 9A) faced the bending of the second display area, and spaced apart from the bending portion by a designated distance (e.g., the designated distance g of FIG. 9A); at least one metal sheet (e.g., the 1-3th metal area 411a-4 of FIG. 9A or at least one metal sheet 411a-4) disposed to cover at least a portion of the non-metal area. The at least one metal sheet may be spaced apart from the bending portion of the second display area.

According to another aspect of the disclosure, at least a portion of the non-metal area may face the bending portion.

According to another aspect of the disclosure, the lower wall of the first cover member may further include a first metal area (e.g., the 1-1th metal area 411a-1 of FIG. 9A) connected with a portion of the non-metal area, electrically connected with the circuit board, and coupled with the at least one metal sheet; and a second metal area (e.g., the 1-2th metal area 411a-2 of FIG. 9A) connected to another portion different from the portion of the non-metal area, coupled with the at least one metal sheet, and electrically connected with the first metal area using the at least one metal sheet.

Thus, the metal areas and/or the metal sheet of the lower end wall are sufficiently spaced part from the second display area of the rollable display. In particular, the part of the electronic device that may act as antenna structure or antenna radiator is sufficiently spaced apart by a designated distance from the second display area of the rollable display, thereby enhancing the antenna performance of the electronic device.

According to another aspect of the disclosure, the electronic device may further comprise a radio frequency integrated circuit (RFIC) disposed on the circuit board and including the communication circuit.

According to another aspect of the disclosure, the RFIC may be configured to transmit/receive a signal through the first metal area, the second metal area, and the at least one metal sheet.

According to another aspect of the disclosure, the electronic device may further comprise at least one electric component (e.g., at least one electric component 371, 372, and 373 of FIG. 8B) disposed on the circuit board and electrically connected with the first metal area. The electric component transmits signal to the external electronic device and receives signal from the external electronic device through the metal area which act as an antenna radiator. Thus, the electric component in conjunction with the metal area, which may act as the antenna radiator, improves the transmission/reception of signal and enhances the performance of the antenna structure.

According to another aspect of the disclosure, the at least one electric component (e.g., at least one electric component 373 of FIG. 8B) may include a low-noise amplifier. The low-noise amplifier may be used for amplifying the weak signal received through the metal area, thereby improving the antenna performance.

According to another aspect of the disclosure, the electronic device may further comprise at least one connector (e.g., at least one connector 381, 382, and 383 of FIG. 8B) configured to electrically connect the RFIC to the first metal area.

According to another aspect of the disclosure, the first metal area, the second metal area, and the at least one metal sheet may form an antenna radiator. Thus, the first metal area, the second metal area, and the at least one metal sheet - which act as an antenna radiator - are sufficiently spaced apart by a designated distance from the second display area of the rollable display so as to prevent or restrict any interference of the component of the rollable display.

According to another aspect of the disclosure, the designated distance may be 0.9mm or more. According to another aspect of the disclosure, the designated distance may be 0.9mm or more and 1.1mm or less. Thus, by securing a sufficient distance between the metal areas - which act as the antenna radiator - and the bendable portion of the rollable display, any interference of signal arising due to the proximity of the display is prevented. Thereby, the overall performance of the antenna structure may be improved.

According to another aspect of the disclosure, the at least one metal sheet may be disposed to face the bending portion, with the non-metal area disposed therebetween. Such an arrangement of placing the non-metal area between the metal sheet and the display prevents any interference of signal due to the proximity of the display. Thus, the functioning of the metal sheet acting as an antenna radiator may be significantly improved.

According to another aspect of the disclosure, the first metal area may be coupled with the at least one metal sheet through ultrasonic fusion (e.g., ultrasonic fusion P1 or P2 of FIG. 9B), the second metal area may be coupled with the at least one metal sheet through ultrasonic fusion (e.g., ultrasonic fusion P1 or P2 of FIG. 9B). By coupling the metal area to the metal sheet through ultrasonic fusion, the thickness of the lower wall of the first cover member may be maintained to be thin.

According to another aspect of the disclosure, the first metal area and the second metal area may have a first stiffness. The at least one metal sheet may have a second stiffness larger than the first stiffness. Thus, by providing a relatively large stiffness to the metal sheet in comparison to the stiffness of the first metal area and the second metal area, a rigid antenna structure can be obtained.

According to another aspect of the disclosure, the lower wall of the first cover member may include at least one area (311a, 311c, 411a, 411c). The at least one area may include the non-metal area, the at least one metal sheet, the first metal area, and the second metal area.

According to another aspect of the disclosure, the lower end wall of the first cover member may include a first area (e.g., the first area 311a of FIGS. 8A and 8B or the first area 411a of FIGS. 9A to 9C), a second area (e.g., the second area 311b of FIGS. 8A and 8B or the second area 411b of FIGS. 9A to 9C), and a third area (e.g., the third area 311c of FIGS. 8A and 8B, or the third area 411c of FIGS. 9A to 9C). The second area may be a segmental portion formed of a non-metal material to divide the first area and the third area. The first area may include the non-metal area, the at least one metal sheet, the first metal area, and the second metal area. The third area includes the non-metal area, the at least one metal sheet, the first metal area, and the second metal area. Thus, the metal areas (e.g., the first metal area, the second metal area, and the metal sheet) of the first area may act as a first antenna radiator and the metal areas (e.g., the first metal area, the second metal area, and the metal sheet) of the third area may act as a second antenna radiator different from the first antenna radiator. Both the first antenna radiator and the second antenna radiator are sufficiently spaced apart from the bending portion of the rollable display, thereby preventing or restricting any interference by the display. In addition, since the first antenna radiator and the second antenna radiator are also spaced apart by the second area or the segmented portion formed of a non-metal, thus, degradation in the performance of the first and the second antenna radiators due to proximity can be avoided. Thus, the overall antenna performance of both the first and the second antenna radiator may be enhanced.

According to another aspect of the disclosure, at least a portion facing the bending portion of the non-metal area of the lower end wall may be formed of a curved surface. Thus, the curved portion of the non-metal area may mitigate any effect of the bending display on the metal sheet, and thus, it may enhance the antenna performance of the metal sheet.

According to another aspect of the disclosure, the electronic device may further comprise a communication module (e.g., the communication module 190 of FIG. 1) electrically connected with the first metal area.

According to another aspect of the disclosure, the lower end wall may include a first flat surface portion (e.g., the first flat surface portion 416 of FIG. 9A) and a second flat surface portion (e.g., the second flat surface portion 417 of FIG. 9A) facing in a direction opposite to the first flat surface portion. The circuit board may be disposed on the first flat surface portion. The second flat surface portion may be disposed to cover at least a portion of the display. Thus, the second flat surface portion may protect the edges of the display from an external damage, and the first flat surface portion may provide a stable electrical connection.

According to various embodiments of the disclosure, an electronic device may comprise a first housing (e.g., the first housing 201 of FIGS. 2 to 4 or the first cover member 211 of FIG. 4); a second housing (e.g., the second housing 202 of FIGS. 2 to 4) configured to slide with respect to the first housing; a display (e.g., the display 203 of FIGS. 2 to 4) including a first display area (e.g., the first display area A1 of FIGS. 2 to 4) and a second display area (e.g., the second display area A2 of FIGS. 2 to 4 or the bending portion A2-1 of FIG. 9A) extending from the first display area, at least a portion of the second display area being configured to be movable based on a slide of the second housing; and at least one electric component (e.g., at least one electric component 371, 372, and 373 of FIG. 8B) electrically connected to the first housing. The second display area may include a bending portion (e.g., the bending portion A2-1 of FIG. 9A) which is bent. The first housing may include a lower end wall (e.g., the 1-1th sidewall 311 of FIG. 7 or the first sidewall 311 of FIG. 8A) including a metal area (e.g., the 1-1th metal area 411a-1, the 1-2th metal area 41 1a-2, or the 1-3th metal area 411a-4 of FIG. 9A) and a non-metal area (e.g., the first non-metal area 411a-3 of FIG. 9A), at least a portion of the lower end wall spaced apart from the second display area by a designated distance (e.g., the designated distance g of FIG. 9A). The designated distance may be 0.9mm or more and 1.1mm or less.

According to various embodiments, the at least one electric component may include a radio frequency integrated circuit (RFIC).

According to various embodiments, at least a portion of the metal area may be a metal sheet (e.g., the 103th metal area 411a-4 or metal sheet 411a-4 of FIG. 9A) facing the bending portion, with the non-metal area disposed therebetween.

According to various embodiments, the metal sheet may be coupled to a rest of the metal area through ultrasonic fusion (e.g., ultrasonic fusion P1 or P2 of FIG. 9B).

According to various embodiments, the electronic device may further comprise at least one connector electrically connecting the at least one electric component with the metal area.

While the disclosure has been shown and described with reference to exemplary embodiments thereof, it will be apparent to those of ordinary skill in the art that various changes in form and detail may be made thereto without departing from the spirit and scope of the disclosure as defined by the following claims.

## Claims

1. An electronic device (101, 200, 300, 400) comprising:
a first housing (201) including a first cover member (211, 310);
a second housing (202) configured to slide with respect to the first housing (201);
a rollable display (203, 231, 403) including: a first display area (A1) and a second display area (A2) extending from the first display area (A1), the second display area (A2) including a bending portion (A2-1) which is bent, and at least a portion of the second display area (A2) being configured to be movable based on a slide of the second housing (202); and
a circuit board (249, 365, 465) disposed at the first housing (201) and including a communication circuit configured to process an RF signal,
wherein a lower end wall (411) of the first cover member (310, 410) includes:
a non-metal area (411a-3) faced the bending portion (A2-1), and spaced apart from the bending portion (A2-1) by a designated distance; and
at least one metal sheet (41 1a-4, 41 1c-4) disposed to cover at least a portion of the non-metal area (411a-3),
wherein at least one metal sheet (411a-4, 411c-4) is spaced apart from the bending portion (A2-1) of the second display area (A2).

2. The electronic device of any of the preceding claims, wherein the lower of the first cover member further comprises:
a first metal area (411a-1, 411c-1) connected with a portion of the non-metal area (411a-3), electrically connected with the circuit board (465), and coupled with the at least one metal sheet (411a-4, 411c-4); and
a second metal area (411a-2, 411c-2) connected to another portion different from the portion of the non-metal area (411a-3), coupled with the at least one metal sheet (41 1a-4, 411c-4), and electrically connected with the first metal area (411a-1, 411c-1) using the at least one metal sheet (411a-4, 41 1c-4).

3. The electronic device of any of the preceding claims, further comprising a radio frequency integrated circuit, RFIC, disposed on the circuit board (365, 465) and including the communication circuit, and
wherein the RFIC is configured to transmit/receive a signal through the first metal area (41 1a-1, 411c-1), the second metal area (41 1a-2, 41 1c-2), and the at least one metal sheet (411a-4, 411c-4).

4. The electronic device of any of the preceding claims, further comprising at least one electric component (371, 471) disposed on the circuit board (365, 465) and electrically connected with the first metal area (41 1a-1, 41 1c-1).

5. The electronic device of any of the preceding claims, wherein the at least one electric component (371, 471) includes a low-noise amplifier.

6. The electronic device of any of the preceding claims, further comprising at least one connector (381) configured to electrically connect the RFIC to the first metal area.

7. The electronic device of any of the preceding claims, wherein the first metal area (41 1a-1, 411c-1), the second metal area (41 1a-2, 41 1c-2), and the at least one metal sheet (411a-4, 41 1c-4) form an antenna radiator.

8. The electronic device of any of the preceding claims, wherein the designated distance is 0.9mm or more.

9. The electronic device of any of the preceding claims, wherein the designated distance is 0.9mm or more and 1.1mm or less.

10. The electronic device of any of the preceding claims, wherein the first metal area (411a-1, 411c-1) is coupled with the at least one metal sheet (41 1a-4, 411c-4), and
wherein the second metal area (411a-2, 411c-2) is coupled with the at least one metal sheet (411a-4, 411c-4).

11. The electronic device of any of the preceding claims, wherein the first metal area (411a-1, 411c-1) and the second metal area (411a-2, 411c-2) have a first stiffness, and
wherein the at least one metal sheet (411a-4, 411c-4) has a second stiffness larger than the first stiffness.

12. The electronic device of any of the preceding claims, wherein the lower end wall (411) of the first cover member (310, 410) includes a first area (311a, 411a), a second area (311b, 411b), and a third area (311c, 411c),
wherein the second area (311b, 411b) is a segmental portion formed of a non-metal material to divide the first area (311a, 411a) and the third area (311c, 411c),wherein the first area (311a, 411a) includes the non-metal area, the at least one metal sheet, the first metal area, and the second metal area; and
wherein the third area (311c, 411c) includes the non-metal area, the at least one metal sheet, the first metal area, and the second metal area.

13. The electronic device of any of the preceding claims, wherein at least a portion facing the bending portion (A2-1) of the non-metal area (41 1a-3) in the lower end wall (411) is formed of a curved surface.

14. The electronic device of any of the preceding claims, further comprising a communication module (190) electrically connected with the first metal area (411a-1).

15. The electronic device of any of the preceding claims, wherein the lower end wall (411) includes a first flat surface portion (416) and a second flat surface portion (417) facing in a direction opposite to the first flat surface portion (416),
wherein the circuit board (365, 465) is disposed on the first flat surface portion (416), and
wherein the second flat surface portion (417) is disposed to cover at least a portion of the display (203, 231, 403).
